# EUROPÄISCHE PATENTSCHRIFT

(11) **EP 3 503 311 B1**
(45) Veröffentlichungstag und Bekanntmachung des Hinweises auf die Patenterteilung: **26.08.2020**
(21) Anmeldenummer: 18211032.0
(22) Anmeldetag: 07.12.2018
(51) Int. Cl.: H01R 25/14, H02G 5/00

(54) **STROMFÜHRUNGSPROFIL**
CURRENT GUIDING PROFILE
PROFILÉ DE GUIDAGE DE COURANT

(30) Priorität: 19.12.2017 DE 102017130571
(43) Veröffentlichungstag der Anmeldung: 26.06.2019
(73) Patentinhaber: Wago Verwaltungsgesellschaft mbH, 32423 Minden (DE)
(72) Erfinder: GASSAUER, Stephan, 99768 Ilfeld (DE); Tumoseit, Jörg, 32361 Preussisch-Oldendorf (DE)
(74) Vertreter: Gramm, Lins & Partner Patent- und Rechtsanwälte PartGmbB

(56) Entgegenhaltungen:
- DE-U1-202016 104 790
- US-A- 2 835 752
- US-A1- 2010 252 297
- US-B1- 6 176 711

## Beschreibung

Die Erfindung betrifft ein Stromführungsprofilgemäß des Oberbegriffs des Anspruchs 1.

EP 1 284 035 B1 offenbart ein Stromschienensystem für Leuchten mit einem Stromleitprofil. Um eine in seiner Länge anpassbares Stromleitprofil zu ermöglichen, sind Drahthalterungselemente vorgesehen, die Nuten zur Aufnahme von elektrischen Leitern haben. Beim Ineinanderfügen der Drahthalterungselemente entsteht so ein Verbindungsbereich, der von außen kontaktiert werden kann. Ein solches Stromleitprofil kann so auf den entsprechenden Anwendungsfall angepasst werden.

Aus der US 2010/0252297 A1 ist eine vielpolige Verbindungsleitung bekannt. Aus der US 6,176,711 B1 ist ein Verbinder zum elektrischen Verbinden zweier elektrischer Kontaktleitungen bekannt. Aus der DE 20 2016 104 790 U1 ist ein Steckverbinder zum endseitigen Aufstecken auf ein Stromführungsprofil bekannt.

Ausgehend hiervon ist es Aufgabe der vorliegenden Erfindung ein verbessertes Stromführungsprofil zu schaffen, bei dem die Längenänderungen durch Ausdehnung des Stromführungsprofils kompensiert und gleichzeitig eine besonders einfache Montage gewährleistet werden kann.

Die Aufgabe wird mit dem Stromführungsprofil mit den Merkmalen des Anspruchs 1 gelöst. Vorteilhafte Ausführungsformen sind in den Unteransprüchen beschrieben. Es wird vorgeschlagen, dass das Brückungselement an den Profilelementen beweglich lagerbar ist, wobei das Brückungselement zwischen den Stirnseiten zweier benachbarter Profilelemente anordbar ist. Dabei fluchten die Nuten des Brückungselementes mit den Nuten der daran angeordneten Profilelemente.

Durch die bewegliche Lagerung des Brückungselementes an den Profilelementen, wird auf einfache Art eine Kompensation bereitgestellt, die eine Ausdehnung des Stromführungsprofils, wie es z.B. durch Wärmeausdehnung geschieht, kompensiert und einen übermäßigen Spalt zwischen zwei Profilelementen vermeidet, um ein sicheres Handling zu gewährleisten.

Gemäß der Erfindung sind die elektrischen Leiter von der gemeinsamen Seite der Profilelemente, zu der hin die Nuten geöffnet sind, und der gemeinsamen Seite des Brückungselements, zu der die Nuten des Brückungselementes hin geöffnet sind, in die Nuten der Profilelemente und die Nuten des Brückungselementes einsetzbar. Dies erlaubt eine besonders einfache Montage des Stromführungsprofils.

Die Profilelemente können Befestigungselemente zur Befestigung an einer Tragschiene haben. Damit lassen sich identisch aufgebaute Profilelemente auf einfache Weise aneinanderreihen. Das Brückungselement ist dabei als separates Bauteil ausgebildet und ist vorzugsweise nicht zur Befestigung an der Tragschiene vorgesehen, sodass das Brückungselement zwischen den Stirnseiten der benachbarten Profilelemente ausreichend Spiel hat, um eine Ausdehnung des Stromführungsprofils zu kompensieren, bzw. die Ausdehnung des Stromführungsprofiles nicht zu behindern.

Vorteilhaft ist, wenn die Profilelemente einen endseitigen Vorsprung haben, wobei das Brückungselement an den endseitigen Vorsprüngen der Profilelemente beweglich lagerbar ist. Durch die Vorsprünge der Profilelemente werden Montageplätze für das Brückungselement bereitgestellt, sodass das Brückungselement lediglich zwischen die Profilelemente auf die Vorsprünge aufgesetzt werden muss. Dabei kann das Brückungselement an der Unterseite Kopplungsvorsprünge zur beweglichen Lagerung an den Profilelementen haben, wobei die Kopplungsvorsprünge in Ausnehmungen der endseitigen Vorsprünge der Profilelemente eintauchen. Denkbar ist aber auch, dass das Brückungselement Ausnehmungen hat, wobei Kopplungsvorsprünge der Profilelemente in die Ausnehmungen des Brückungselementes eintauchen. Von einer Unterseite ist die Seite zu verstehen, die den Nuten abgewandt ist.

Die Profilelemente und das Brückungselement können einen Spalt bilden, wobei der Spalt zwischen den Nuten der Profilelemente und den Nuten des Brückungselementes angeordnet ist. Durch den Spalt können einerseits in den Nuten angeordnete elektrische Leiter von der offenen Seite der Nuten her abgegriffen werden, andererseits gewährleistet der Spalt eine hinreichende Bediensicherheit, da eine Berührung der elektrischen Leiter durch einen hinreichend engen Spalt verhindert wird. Ferner vorteilhaft ist es, wenn das Brückungselement und/oder die Profilelemente Anschläge zur Begrenzung des Spaltes zwischen dem Brückungselement und dem Profilelement haben. Durch Anschläge kann der Spalt derartig begrenzt werden, dass eine Berührung des elektrischen Leiters durch den Bediener nicht möglich ist. Hierzu wird der Spalt derartig begrenzt, dass ein Hineingreifen durch den Bediener nicht möglich ist. Es wird somit verhindert, dass sich das Brückungselement lediglich in Richtung nur eines Profilelementes relativ bewegt und sich somit die Spalte mehr oder weniger gleichmäßig verbreitern oder verkleinern.

Das Brückungselement kann an den Profilelementen schwimmend gelagert sein. Durch die schwimmende Lagerung kann das Brückungselement und/oder die Profilelemente mechanische oder thermische Längenänderungen erfahren, ohne dass sich diese verspannen. Bei einer schwimmenden Lagerung hat das Brückungselement in Längserstreckungsrichtung Spiel, sodass Längenänderungen durch das Brückungselement aufgenommen werden können, indem dieses sich in der Längserstreckungsrichtung verschiebt. Dies hat den Vorteil, dass eine kostengünstige Konstruktion erreicht werden kann, die mit geringem Aufwand die Ausdehnung des Brückungselementes und der Profilelemente im Bereich des Spiels der Lagerung kompensiert.

Die Nuten der Profilelemente und die Nuten des Brückungselementes zur Aufnahme elektrischer Leiter können unterschiedliche Aufnahmeebenen haben. Vorteilhaft ist es, wenn die nebeneinanderliegenden Nuten der Profilelemente und die nebeneinanderliegende Nuten des Brückungselementes jeweils höhenversetzt zueinander angeordnet sind. Auf diese Weise werden die Luft- und Kriechstrecken noch weiter um den Höhenversatz vergrößert. Der Höhenversatz ist das Abstandsmaß der benachbarten elektrischen Leiter oder der Nutgründe benachbarter Nuten in die Eintauchrichtung in eine Nut von der offenen Oberseite zum Nutgrund hin gesehen.

Dabei kann eine erste Gruppe von Nuten mit ihrem Nutgrund eine erste Ebene aufspannen und eine zweite Gruppe von Nuten, die jeweils zwischen zwei Nuten der ersten Gruppe angeordnet sind, kann mit ihren Nutgründen eine zweite Ebene aufspannen. Die erste und zweite Ebene sind dann höhenversetzt zueinander angeordnet. Das heißt, dass die Nuten quer zur Längserstreckungsrichtung des Profilelementes und des Brückungselementes gesehen alternierend höhenversetzt angeordnet sind. Die benachbarten Nuten sind unterschiedlich tief, sodass die benachbarten elektrischen Leiter alternierend höhenversetzt angeordnet sind.

Das Brückungselement kann über wenigstens eine Sollbruchstelle an die Profilelemente angebunden sein, wobei die Sollbruchstelle unter Krafteinwirkung aufbrechbar ist und das Brückungselement mit den Profilelementen verbindet. So kann auf einfache konstruktive Weise ein Stromführungsprofil bereitgestellt werden, das unter Krafteinwirkung z.B. eines einzulegenden elektrischen Leiters in die Nuten des Brückungselementes das Brückungselement mit den Profilelementen verbindet, wobei die Sollbruchstellen aufbrechen.

Ferner vorteilhaft ist es, wenn die Sollbruchstellen an der Ober- und/oder Stirnseite der Profilelemente angeordnet sind. So kann das Brückungselement an die Profilelemente angebunden werden, sodass eine Montage nach Aufbrechen der Sollbruchstellen des Brückungselementes an die Profilelemente erleichtert ist. Weiter vorteilhaft ist es, wenn die Sollbruchstellen durch Einwirken einer horizontalen und/oder vertikalen Kraft aufbrechen. So können bei einer typischen Montage eines Stromführungsprofils die Sollbruchstellen des Stromführungsprofils aufgebrochen werden und das Brückungselement mit den Profilelementen verbunden werden. Dies kann so z.B. beim Einlegen eines elektrischen Leiters in die Nuten des Brückungselementes geschehen, beim Einsetzen der Profilelemente in die Tragschiene unter Druck oder durch Stecken der Profilelemente.

Die Sollbruchstellen können dadurch bereitgestellt werden, indem das Brückungselement an wenigstens eines der zwei Profilelemente einstückig angeformt oder angespritzt ist. So kann im Herstellungsverfahren der einzelnen Elemente zugleich ein Stromführungsprofil bereitgestellt werden, das eine einfache Montage des Brückungselementes an die Profilelemente bereitstellt.

Denkbar ist auch, dass an dem den Sollbruchstellen gegenüberliegenden Ende des Brückungselementes ein Montagevorsprung vorgesehen ist, welcher ein sicheres Einführen des Brückungselementes in die sich gegenüberliegenden Profilelemente gewährleistet.

Die Erfindung wird nachfolgend anhand von Ausführungsbeispielen mit den beigefügten Zeichnungen näher erläutert. Es zeigen:
- Figur 1: - die Oberseite eines Stromführungsprofils mit einem Brückungselement und zwei Profilelementen;
- Figur 2: - die Unterseite eines Stromführungsprofils mit einem Brückungselement und zwei Profilelementen;
- Figur 3: - Schnittansicht eines Stromführungsprofils nach Figur 2;
- Figur 4: - eine Prinzipzeichnung eines Stromführungsprofils in einer Seitenansicht;
- Figur 5: - eine Prinzipzeichnung eines Stromführungsprofils in einer Schnittansicht nach Figur 4;
- Figur 6: - eine Prinzipzeichnung eines Stromführungsprofils in einer Seitenansicht mit eingelegtem Leiter.

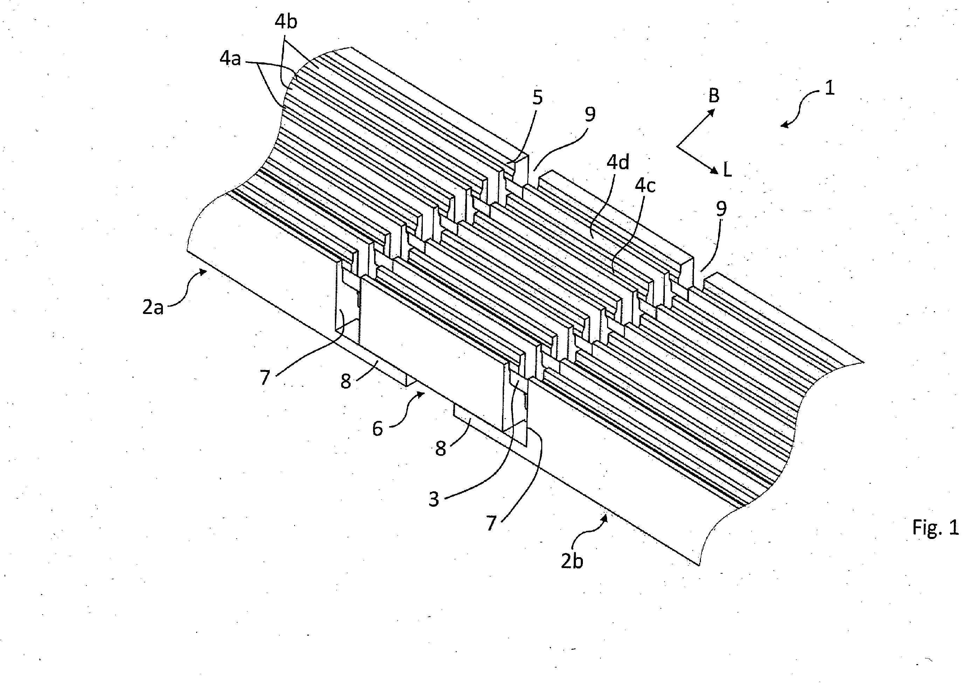

Figur 1 zeigt eine perspektivische Ansicht eines Stromführungsprofils 1 mit zwei elektrisch isolierenden Profilelementen 2a, 2b. Die Profilelemente 2a, 2b sind längenreduziert dargestellt, indem sie entlang ihrer Längserstreckungsrichtung L abgeschnitten sind. Die Profilelemente 2a, 2b haben entsprechend der Anzahl aufzunehmender elektrischer Leiter 3 eine Anzahl von Nuten 4a, 4b. Jede Nut 4a, 4b ist durch ein Paar von Nutenwänden 5 begrenzt, die sich in Längserstreckungsrichtung L des jeweiligen Profilelementes 2a, 2b erstrecken und in einer Breitenrichtung B parallel nebeneinander angeordnet sind. Die Nuten 4a, 4b sind derartig ausgebildet, dass elektrische Leiter 3 eingelegt werden können.

Das Stromführungsprofil 1 hat ein Brückungselement 6, wobei das Brückungselement zwischen den Stirnseiten 7 der Profilelemente 2a, 2b angeordnet ist, wobei das Brückungselement in Längserstreckungsrichtung L und in einer Breitenrichtung B parallel nebeneinander angeordnete Nuten 4c, 4d hat, die derartig zu den Nuten 4a, 4b der Profilelemente 2a, 2b angeordnet sind, dass die Nuten 4c, 4d des Brückungselementes 6 und die Nuten 4a, 4b der Profilelemente 2a, 2b eine gemeinsame Einrichtung zur Aufnahme elektrischer Leiter 3 bilden. Das Brückungselement 6 ist dabei an endseitigen Vorsprüngen 8 der Profilelemente 2a, 2b beweglich gelagert. Erkennbar ist, dass sich zwischen jeweils den Stirnseiten 7 der Profilelemente 2a, 2b und einer jeweils zugewandten Stirnseite des Brückungselementes 6 ein offener Spalt 9 vorhanden ist. Der Spalt 9 ist dabei derartig begrenzt, dass die Sicherheit des Bedieners gewährleistet ist und zugleich dennoch der elektrische Leiter 3 von außen abgegriffen werden kann. So darf das Ausmaß eines Spaltes 9 nicht dermaßen überschritten werden, sodass der Bediener mit seinen Fingern aus Versehen die elektrischen Leiter 3 berühren kann.

Deutlich wird, dass durch die bewegliche Lagerung des Brückungselementes 6 an den endseitigen Vorsprüngen 8 der Profilelemente 2a, 2b eine Längenausdehnung des Stromführungsprofils 1, z.B. durch Wärmeausdehnung, kompensiert werden kann. Dabei verschieben sich die Profilelemente 2a, 2b und das Brückungselement 6 zueinander, sodass sich der Spalt 9 verkleinert.

Nebeneinander angeordnete Nuten 4a, 4b; 4c, 4d haben eine gemeinsame Nutseitenwand 5. Deutlich wird, dass die nebeneinander angeordneten Nuten 4a, 4b; 4c, 4d alternierend höhenversetzt angeordnet sind. Hierbei liegt eine erste Gruppe von Nuten 4a, 4c in einer gemeinsamen Ebene und eine zweite Gruppe von Nuten 4b, 4d in einer weiteren Ebene, wobei die Ebenen höhenversetzt zueinander angeordnet und vorzugsweise parallel zueinander ausgerichtet sind. Der eingelegte elektrische Leiter 3 ist in der zweiten Ebene aufgrund des Höhenversatzes nicht erkennbar.

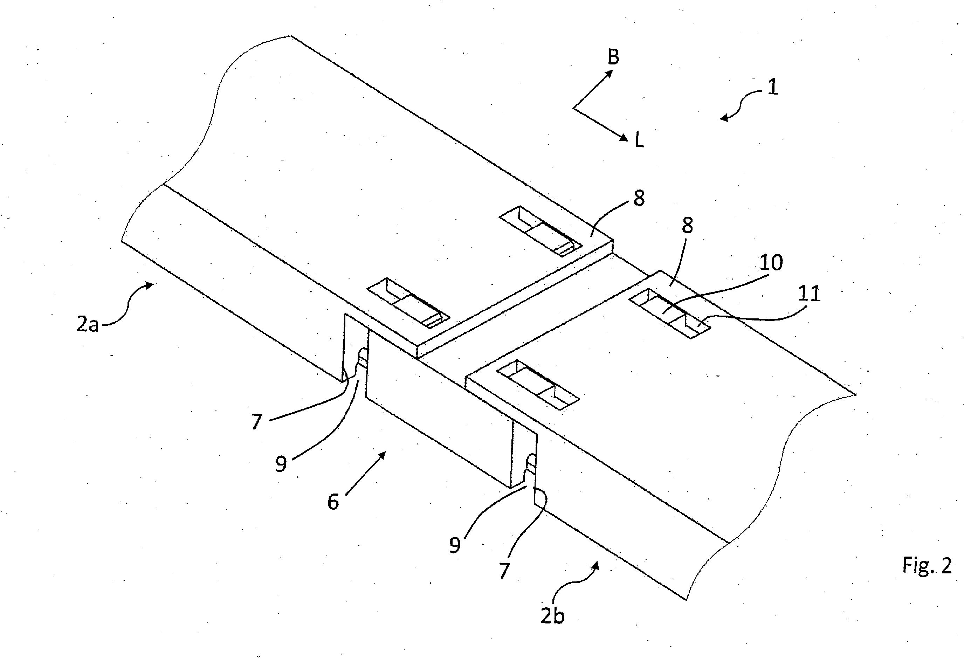

Figur 2 zeigt eine perspektivische Ansicht der Unterseite des Stromführungsprofils 1 aus Figur 1. Die Unterseite des Stromführungsprofils 1 ist dabei die Seite, die von den Nuten 4a, 4b der Profilelemente 2a, 2b und den Nuten 4c, 4d des Brückungselementes 6 abgewandt ist. Deutlich wird, dass das Brückungselement 6 Kopplungsvorsprünge 10 hat, die in Ausnehmungen 11 an den endseitigen Vorsprüngen 8 der Profilelemente 2a, 2b eintauchen. Erkennbar ist, dass das Brückungselement 6 über vier Kopplungsvorsprünge 10 in jeweils zwei Ausnehmungen 11 der Profilelemente 2a, 2b zwischen den Stirnseiten 7 beweglich gelagert ist und somit eine Längenänderung des Stromführungsprofils 1 kompensiert werden kann.

Denkbar ist aber auch, dass das Brückungselement 6 Ausnehmungen 11 hat, in die Kopplungsvorsprünge 10 der Profilelemente 2a, 2b eintauchen und somit eine bewegliche Lagerung des Brückungselementes 6 bereitstellen. Die Anzahl der Kopplungsvorsprünge 10 und die dazugehörigen Ausnehmungen 11 ist dabei nicht auf dieses Ausführungsbeispiel festgelegt, sondern kann je nach Anwendungsfall variieren.

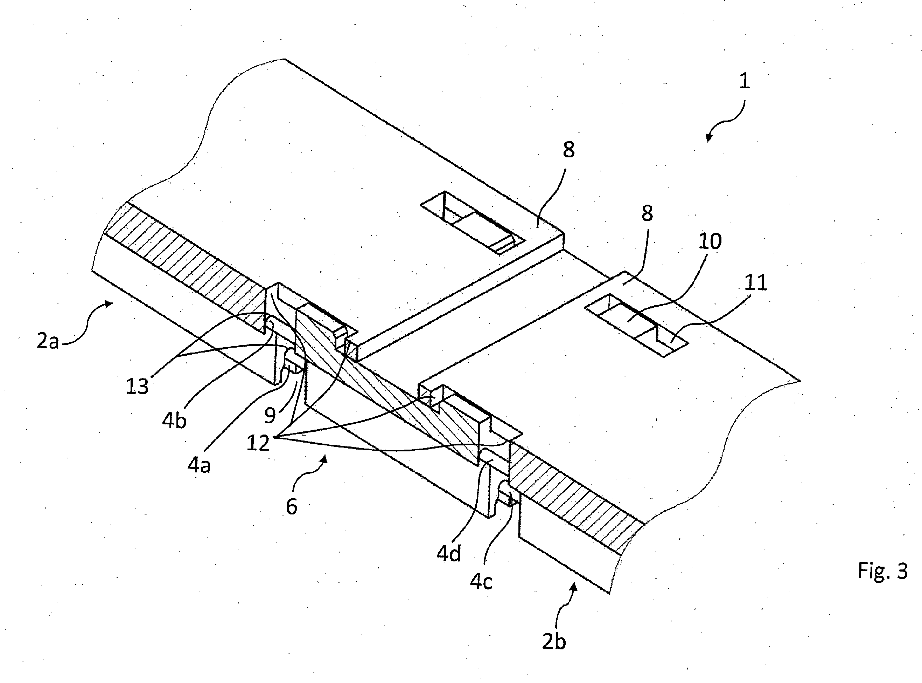

Figur 3 zeigt eine perspektivische Ansicht der Unterseite eines Stromführungsprofils 1 aus Figur 1 in einer Schnittansicht. Deutlich wird, dass die nebeneinander angeordneten Nuten 4a, 4b; 4c, 4d mit ihrem Nutengrund 13 alternierend höhenversetzt zueinander angeordnet sind. Weiterhin erkennbar ist, dass die Profilelemente 2a, 2b Anschläge 12 innerhalb der Ausnehmung 11 aufweisen, sodass der Spalt zwischen den Profilelementen 2a, 2b und dem Brückungselement in seinen Ausmaßen begrenzt wird. Dadurch wird die Sicherheit des Bedieners gewährleistet.

Denkbar ist aber auch, dass die Anschläge 12 an dem Brückungselement 6 angeordnet sind.

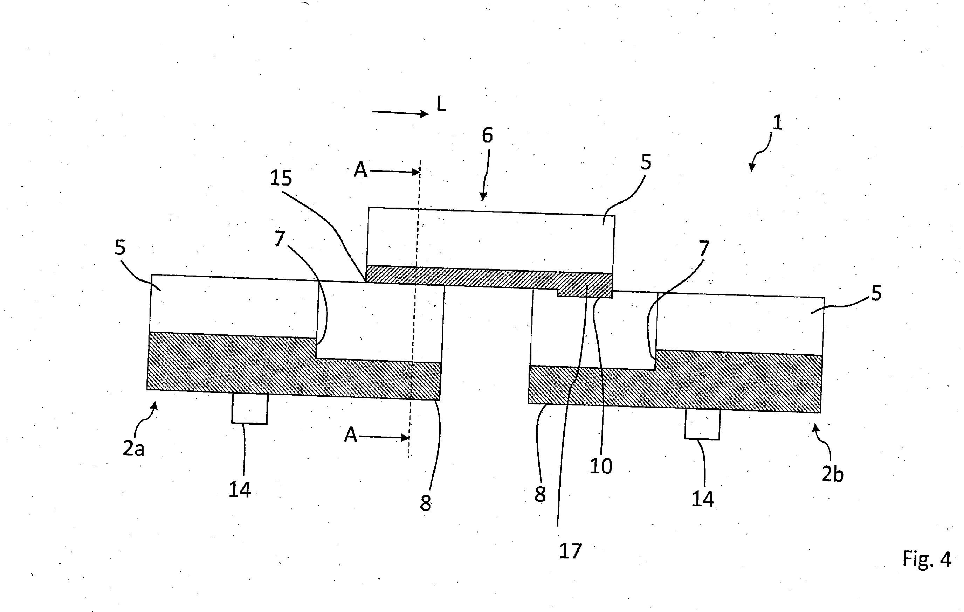

Figur 4 zeigt eine schematische Darstellung eines Stromführungsprofils 1 in einer Seitenansicht mit zwei elektrisch isolierenden Profilelementen 2a, 2b. Die Profilelemente 2a, 2b weisen dabei Rastelemente 14 zur Befestigung an einer Tragschiene auf. Deutlich wird, dass das Brückungselement 6 über zumindest eine Sollbruchstelle 15 an die Oberseite an eines der Profilelemente 2a, 2b angebunden ist. Das Brückungselement 6 hat hingegen keine Rastelemente 14, damit eine bewegliche Lagerung gewährleistet wird.

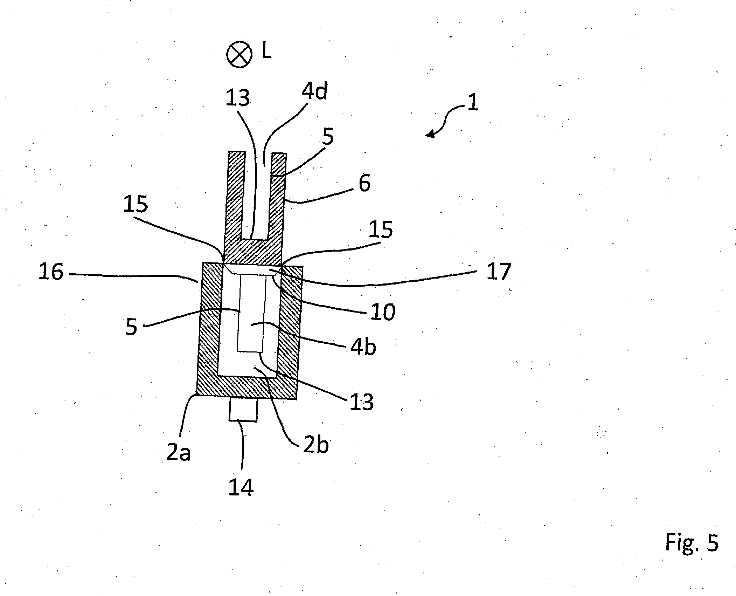

Eine Anbindung kann z.B. über ein Spritzgussverfahren in der Herstellung des Stromführungsprofils 1 erfolgen. Über die Anbindung des Brückungselementes 6 an die Profilelemente 2a, 2b wird ein kompaktes Stromführungsprofil 1 bereitgestellt. Bei Montage können die Sollbruchstellen 15 unter Krafteinwirkung, z.B. durch Einlegen eines elektrischen Leiters in die Nuten des Brückungselementes 6 aufgebrochen werden, sodass das Brückungselement 6 beweglich gelagert mit den Profilelementen 2a, 2b verbunden wird. Vorzugsweise ist das Brückungselement 6 lediglich nur an einem Stromführungsprofil 2a über eine Sollbruchstelle 15 angebunden. An seinem zum zweiten Stromführungsprofil 2b weisenden freien Ende kann ein Montagevorsprung 17 vorgesehen sein. Der Montagevorsprung 17 ragt von dem Brückungselement 6 in Richtung der Eintauchrichtung in die Nuten 4a, 4b ab. In einer Vormontagestellung der Profilelemente 2a, 2b ragt dieser Montagevorsprung 17 in eine korrespondierende Ausnehmung am zweiten Profilelement 2b (siehe auch Figur 5).

Denkbar ist aber auch, dass das Brückungselement 6 an wenigstens eine Stirnseite 7 der Profilelemente 2a, 2b über Sollbruchstellen miteinander verbunden werden kann und diese Sollbruchstellen unter vertikaler Krafteinwirkung in Längserstreckungsrichtung des Stromführungsprofils 1 aufbrechen.

Figur 5 zeigt ein schematisches Stromführungsprofil in einer Schnittansicht A-A aus Figur 4. Zur vereinfachten Darstellung ist nur eine einzelne Nut 4 des Brückungselementes 6 und der Profilelemente 2a, 2b dargestellt. Eine Ausführung mit nebeneinander angeordneten Nuten ist aber auch weiterhin denkbar. Deutlich wird, dass nach Aufbrechen der Sollbruchstellen 15 das Brückungselement 6 passgenau zwischen die Wandungen 16 der Profilelemente 2a, 2b eintaucht und eine gemeinsame Aufnahme für elektrische Leiter bereitstellt. Die Nut 4d des Brückungselementes 6 ist dabei achsensymmetrisch mit der Nut 4b der Profilelemente 2a, 2b ausgerichtet, sodass ein elektrischer Leiter in die Nuten 4b, 4d eingesetzt werden kann.

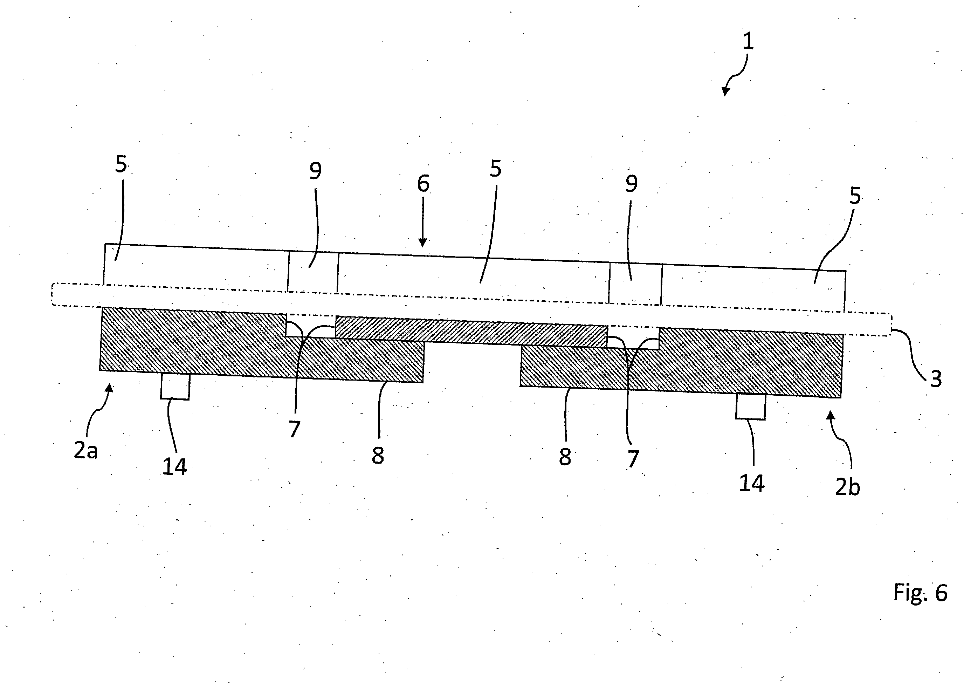

Figur 6 zeigt eine schematische Ansicht eines Stromführungsprofils 1 nach Aufbrechen der Sollbruchstellen 15 aus Figur 4 und 5. Es wird deutlich, dass das Brückungselement 6 beweglich über die endseitigen Vorsprünge 8 der Profilelemente 2a, 2b verbunden ist. Dabei befindet sich ein Spalt 9 zwischen den Stirnseiten 7 der Profilelemente 2a, 2b und den Stirnseiten 7 des Brückungselementes 6. Durch Einlegen eines elektrischen Leiters 3 in das Brückungselement 6 wurden die Sollbruchstellen 15 aus Figur 4 und Figur 5 aufgebrochen. Die Nuten 4a, 4b mit den begrenzenden Nutenwänden 5 der Profilelemente 2a, 2b und die Nuten 4c, 4d des Brückungselementes 6 bilden so eine gemeinsame Einrichtung zur Aufnahme des elektrischen Leiters 3. Dabei kann der elektrische Leiter 3 über den Spalt 9 weiterhin abgegriffen werden ohne die Sicherheit des Bedieners zu gefährden. Eine Ausdehnung des Stromführungsprofils 1 wird durch die bewegliche Lagerung des Brückungselementes 6 an den Profilelementen 2a, 2b kompensiert, sodass Bauteilspannungen nicht zu Schäden führen können.

Die Figuren 1 bis 6 verstehen sich als mögliche Ausführungsbeispiele. Andere Formen der erfindungsgemäßen Lehre sind weiterhin denkbar. Des Weiteren sind die Ausgestaltungen der Ausführungsbeispiele nicht untrennbar miteinander verknüpft, sodass z.B. die Ausführung der Erfindung nicht abhängig ist von der Anzahl der Nuten 4a, 4b, 4c, 4d, der Anzahl der Kopplungsvorsprünge 10 oder Ausnehmungen 11 oder die zwingende Lagerung des Brückungselementes 6 an endseitigen Vorsprüngen 8 der Profilelemente 2a, 2b.

### Bezugszeichenliste

- 1: Stromführungsprofil
- 2a, 2b: Profilelemente
- 3: elektrischer Leiter
- 4a, 4b: Nuten der Profilelemente
- 4c, 4d: Nuten des Brückungselementes
- 5: Nutseitenwände
- 6: Brückungselement
- 7: Stirnseite der Profilelemente
- 8: endseitiger Vorsprung der Profilelemente
- 9: Spalt
- 10: Kopplungsvorsprünge
- 11: Ausnehmung
- 12: Anschläge
- 13: Nutengrund
- 14: Rastelement
- 15: Sollbruchstelle
- 16: Wandung
- 17: Montagevorsprung
- L: Längserstreckungsrichtung
- B: Breitenrichtung

## Patentansprüche

1. Stromführungsprofil (1) mit wenigstens zwei Profilelementen (2a, 2b) und einem Brückungselement (6), wobei die die Profilelemente (2a, 2b) parallel nebeneinander sich in einer Längserstreckungsrichtung (L) der Profilelemente (2a, 2b) erstreckende Nuten (4a, 4b) zur Aufnahme elektrischer Leiter haben, wobei die Nuten (4a, 4b) durch ein Paar von Nutenwänden (5) begrenzt sind, einen Nutgrund (13) haben und zu einer gemeinsamen Seite des Profilelements (2a, 2b) hin geöffnet sind und wobei die Profilelemente (2a, 2b) über das Brückungselement (6) miteinander verbunden sind, wobei das Brückungselement (6) nebeneinander in der Längserstreckungsrichtung (L) des Brückungselementes (6) angeordnete Nuten (4c, 4d) hat, die derartig zu den Nuten (4a, 4b) der Profilelemente (2a, 2b) anordbar sind, dass die Nuten (4c, 4d) des Brückungselementes (6) und die Nuten (4a, 4b) der Profilelemente (2a, 2b) eine gemeinsame Einrichtung zur Aufnahme für elektrische Leiter (3) bilden, derart, dass die Nuten (4c, 4d) des Brückungselementes (6) durch ein Paar von Nutenwänden (5) begrenzt sind, einen Nutgrund (13) haben und zu einer gemeinsamen Seite des Brückungselementes (6) hin geöffnet sind, wobei die Nuten der Profilelemente (2a, 2b) und die Nuten des Brückungselementes (6) zur gleichen Seite hin geöffnet sind, wobei das Brückungselement (6) an den Profilelementen (2a,2b) beweglich lagerbar ist, wobei das Brückungselement (6) zwischen den Stirnseiten (7) zweier benachbarter Profilelemente (2a,2b) anordbar ist, **dadurch gekennzeichnet, dass** die elektrischen Leiter (3) von der gemeinsamen Seite der Profilelemente (2a, 2b), zu der hin die Nuten (4a, 4b) geöffnet sind, und der gemeinsamen Seite des Brückungselementes (6), zu der die Nuten (4c, 4d) des Brückungselementes (6) hin geöffnet sind, in die Nuten (4a, 4b) der Profilelemente (2a, 2b) und die Nuten (4c, 4d) des Brückungselementes (6) einsetzbar sind.

2. Stromführungsprofil (1) nach Anspruch 1, **dadurch gekennzeichnet, dass** das Brückungselement (6) an wenigstens einem endseitigen Vorsprung (8) der Profilelemente (2a, 2b) beweglich lagerbar ist.

3. Stromführungsprofil (1) nach Anspruch 2, **dadurch gekennzeichnet, dass** das Brückungselement (6) an der Unterseite Kopplungsvorsprünge (10) zur beweglichen Lagerung an den Profilelementen (2a, 2b) hat, wobei die Kopplungsvorsprünge (10) in Ausnehmungen (11) der endseitigen Vorsprünge (8) der Profilelemente (2a, 2b) eintauchen oder die Profilelemente (2a, 2b) Kopplungsvorsprunge (10) haben, wobei die Kopplungsvorsprunge (10) in Ausnehmungen (11) des Brückungselementes (6) eintauchen.

4. Stromführungsprofil (1) nach einem der vorhergehenden Ansprüche, **dadurch gekennzeichnet, dass** die Profilelemente (2a, 2b) und das Brückungselement (6) einen Spalt (9) bilden, wobei der Spalt (9) zwischen den Stirnseiten (7) der Profilelemente (2a, 2b) und den Stirnseiten (7) des Brückungselementes (6) angeordnet ist.

5. Stromführungsprofil (1) nach Anspruch 4, **dadurch gekennzeichnet, dass** das Brückungselement (6) und/oder die Profilelemente (2a, 2b) Anschläge (12) zur Begrenzung des Spaltes (9) zwischen den Stirnseiten (7) des Brückungselementes (6) und den Stirnseiten (7) der Profilelemente (2a, 2b) haben.

6. Stromführungsprofil (1) nach einem der vorhergehenden Ansprüche, **dadurch gekennzeichnet, dass** das Brückungselement (6) an den Profilelementen (2a, 2b) schwimmend lagerbar ist.

7. Stromführungsprofil (1) nach einem der vorhergehenden Ansprüche, **dadurch gekennzeichnet, dass** nebeneinanderliegende Nuten (4a, 4b) der Profilelemente (2a, 2b) und nebeneinanderliegende Nuten (4c, 4d) des Brückungselementes (6) jeweils höhenversetzt zueinander angeordnet sind.

8. Stromführungsprofil (1) nach einem der vorhergehenden Ansprüche, **dadurch gekennzeichnet, dass** das Brückungselement (6) über wenigstens eine Sollbruchstelle (15) an zumindest eines der Profilelemente (2a, 2b) angebunden ist, wobei die Sollbruchstelle (15) unter Krafteinwirkung aufbrechbar ist und das Brückungselement (6) mit den Profilelementen (2a, 2b) verbindet.

9. Stromführungsprofil (1) nach Anspruch 8, **dadurch gekennzeichnet, dass** die Sollbruchstelle (15) an der Ober- und/oder Stirnseite (7) der Profilelemente (2a, 2b) angeordnet ist.

10. Stromführungsprofil (1) nach Anspruch 8 oder 9, **dadurch gekennzeichnet, dass** die Sollbruchstelle (15) durch Einwirken einer horizontalen und/oder vertikalen Kraft aufbricht.

11. Stromführungsprofil (1) nach einem der Ansprüche 8 bis 11, **dadurch gekennzeichnet, dass** das Brückungselement (6) an wenigstens eines der Profilelemente (2a, 2b) einstückig angeformt oder angespritzt ist.

12. Stromführungsprofil (1) nach einem der vorhergehenden Ansprüche, **dadurch gekennzeichnet, dass** die Profilelemente (2a, 2b) Rastelemente (14) zur Befestigung an einer Tragschiene haben.

## Claims

1. Current-carrying profile (1) comprising at least two profile elements (2a, 2b) and one bridging element (6), wherein the profile elements (2a, 2b) have grooves (4a, 4b), which extend parallel next to one another in a direction (L) of longitudinal extent of the profile elements (2a, 2b), for receiving electrical conductors, wherein the grooves (4a, 4b) are delimited by a pair of groove walls (5), have a groove base (13) and are open towards the common side of the profile element (2a, 2b), and wherein the profile elements (2a, 2b) are connected to one another by means of the bridging element (6), wherein the bridging element (6) has grooves (4c, 4d) which are arranged next to one another in the direction (L) of longitudinal extent of the bridging element (6) and can be arranged in relation to the grooves (4a, 4b) of the profile elements (2a, 2b) in such a way that the grooves (4c, 4d) of the bridging element (6) and the grooves (4a, 4b) of the profile elements (2a, 2b) form a common device for receiving electrical conductors (3) in such a way that the grooves (4c, 4d) of the bridging element (6) are delimited by a pair of groove walls (5), have a groove base (13) and are open towards a common side of the bridging element (6), wherein the grooves of the profile elements (2a, 2b) and the grooves of the bridging element (6) are open towards the same side, wherein the bridging element (6) can be mounted in a movable manner on the profile elements (2a, 2b), wherein the bridging element (6) can be arranged between the end sides (7) of two adjacent profile elements (2a, 2b), **characterized in that** the electrical conductors (3) can be inserted into the grooves (4a, 4b) of the profile elements (2a, 2b) and the grooves (4c, 4d) of the bridging element (6) from the common side of the profile elements (2a, 2b), towards which side the grooves (4a, 4b) are open, and the common side of the bridging element (6), towards which side the grooves (4c, 4d) of the bridging element (6) are open.

2. Current-carrying profile (1) according to Claim 1, **characterized in that** the bridging element (6) can be mounted in a movable manner on at least one end-side projection (8) of the profile elements (2a, 2b).

3. Current-carrying profile (1) according to Claim 2, **characterized in that** the bridging element (6) has, on the bottom side, coupling projections (10) for movable mounting on the profile elements (2a, 2b), wherein the coupling projections (10) enter recesses (11) of the end-side projections (8) of the profile elements (2a, 2b) or the profile elements (2a, 2b) have coupling projections (10), wherein the coupling projections (10) enter recesses (11) of the bridging element (6).

4. Current-carrying profile (1) according to one of the preceding claims, **characterized in that** the profile elements (2a, 2b) and the bridging element (6) form a gap (9), wherein the gap (9) is arranged between the end sides (7) of the profile elements (2a, 2b) and the end sides (7) of the bridging element (6).

5. Current-carrying profile (1) according to Claim 4, **characterized in that** the bridging element (6) and/or the profile elements (2a, 2b) have stops (12) for delimiting the gap (9) between the end sides (7) of the bridging element (6) and the end sides (7) of the profile elements (2a, 2b).

6. Current-carrying profile (1) according to one of the preceding claims, **characterized in that** the bridging element (6) can be mounted in a floating manner on the profile elements (2a, 2b).

7. Current-carrying profile (1) according to one of the preceding claims, **characterized in that** grooves (4a, 4b) of the profile elements (2a, 2b), which grooves are situated next to one another, and grooves (4c, 4d) of the bridging element (6), which grooves are situated next to one another, are respectively arranged in a vertically offset manner in relation to one another.

8. Current-carrying profile (1) according to one of the preceding claims, **characterized in that** the bridging element (6) is joined to at least one of the profile elements (2a, 2b) by means of at least one predetermined breaking point (15), wherein the predetermined breaking point (15) can be broken open under the action of force and connects the bridging element (6) to the profile elements (2a, 2b).

9. Current-carrying profile (1) according to Claim 8, **characterized in that** the predetermined breaking point (15) is arranged on the top side and/or end side (7) of the profile elements (2a, 2b).

10. Current-carrying profile (1) according to Claim 8 or 9, **characterized in that** the predetermined breaking point (15) breaks open under the action of a horizontal and/or vertical force.

11. Current-carrying profile (1) according to one of Claims 9 to 10, **characterized in that** the bridging element (6) is integrally formed or injection-moulded onto at least one of the profile elements (2a, 2b).

12. Current-carrying profile (1) according to one of the preceding claims, **characterized in that** the profile elements (2a, 2b) have latching elements (14) for fastening to a mounting rail.

## Revendications

1. Profilé de conduction de courant (1), comprenant au moins deux éléments de profilé (2a, 2b) et un élément de pontage (6), les éléments de profilé (2a, 2b) présentant en parallèle côte à côte des rainures (4a, 4b) s'étendant dans une direction d'extension longitudinale (L) des éléments de profilé (2a, 2b) pour recevoir des conducteurs électriques, dans lequel les rainures (4a, 4b) sont délimitées par une paire de parois de rainure (5), présentent un fond de rainure (13) et sont ouvertes vers un côté commun de l'élément de profilé (2a, 2b), et dans lequel les éléments de profilé (2a, 2b) sont reliés l'un à l'autre par l'élément de pontage (6), dans lequel l'élément de pontage (6) présente des rainures (4c, 4d) disposées côte à côte dans la direction d'extension longitudinale (L) de l'élément de pontage (6), qui peuvent être disposées par rapport aux rainures (4a, 4b) des éléments de profilé (2a, 2b) de telle sorte que les rainures (4c, 4d) de l'élément de pontage (6) et les rainures (4a, 4b) des éléments de profilé (2a, 2b) forment un dispositif commun pour recevoir des conducteurs électriques (3), de telle sorte que les rainures (4c, 4d) de l'élément de pontage (6) sont délimitées par une paire de parois de rainure (5), présentent un fond de rainure (13) et sont ouvertes vers un côté commun de l'élément de pontage (6), dans lequel les rainures des éléments de profilé (2a, 2b) et les rainures de l'élément de pontage (6) sont ouvertes vers le même côté, l'élément de pontage (6) pouvant être monté mobile sur les éléments de profilé (2a,2b), l'élément de pontage (6) pouvant être disposé entre les faces frontales (7) de deux éléments de profilé (2a, 2b) voisins,
**caractérisé en ce que** les conducteurs électriques (3), depuis le côté commun des éléments de profilé (2a, 2b) vers lequel les rainures (4a, 4b) sont ouvertes, et depuis le côté commun de l'élément de pontage (6) vers lequel les rainures (4c, 4d) de l'élément de pontage (6) sont ouvertes, peuvent être insérés dans les rainures (4a, 4b) des éléments de profilé (2a, 2b) et dans les rainures (4c, 4d) de l'élément de pontage (6).

2. Profilé de conduction de courant (1) selon la revendication 1, **caractérisé en ce que** l'élément de pontage (6) peut être monté mobile sur au moins une saillie (8) côté extrémité des éléments de profilé (2a, 2b).

3. Profilé de conduction de courant (1) selon la revendication 2, **caractérisé en ce que** l'élément de pontage (6) présente sur la face inférieure des saillies de couplage (10) pour le montage mobile sur les éléments de profilé (2a, 2b), les saillies de couplage (10) s'enfonçant dans des creux (11) des saillies côté extrémité (8) des éléments de profilé (2a, 2b) ou les éléments de profilé (2a, 2b) présentant des saillies de couplage (10), les saillies de couplage (10) s'enfonçant dans des creux (11) de l'élément de pontage (6).

4. Profilé de conduction de courant (1) selon l'une quelconque des revendications précédentes, **caractérisé en ce que** les éléments de profilé (2a, 2b) et l'élément de pontage (6) forment un intervalle (9), l'intervalle (9) étant disposé entre les faces frontales (7) des éléments de profilé (2a, 2b) et les faces frontales (7) de l'élément de pontage (6).

5. Profilé de conduction de courant (1) selon la revendication 4, **caractérisé en ce que** l'élément de pontage (6) et/ou les éléments de profilé (2a, 2b) présentent des butées (12) pour délimiter l'intervalle (9) entre les faces frontales (7) de l'élément de pontage (6) et les faces frontales (7) des éléments de profilé (2a, 2b).

6. Profilé de conduction de courant (1) selon l'une quelconque des revendications précédentes, **caractérisé en ce que** l'élément de pontage (6) peut être monté flottant sur les éléments de profilé (2a, 2b).

7. Profilé de conduction de courant (1) selon l'une quelconque des revendications précédentes, **caractérisé en ce que** des rainures (4a, 4b) adjacentes des éléments de profilé (2a, 2b) et des rainures (4c, 4d) adjacentes de l'élément de pontage (6) sont disposées respectivement de manière décalée en hauteur les unes par rapport aux autres.

8. Profilé de conduction de courant (1) selon l'une quelconque des revendications précédentes, **caractérisé en ce que** l'élément de pontage (6) est relié à au moins l'un des éléments de profilé (2a, 2b) par au moins un point destiné à la rupture (15), le point destiné à la rupture (15) pouvant être brisé sous l'effet d'une force et reliant l'élément de pontage (6) aux éléments de profilé (2a, 2b).

9. Profilé de conduction de courant (1) selon la revendication 8, **caractérisé en ce que** le point destiné à la rupture (15) est disposé sur la face supérieure et/ou frontale (7) des éléments de profilé (2a, 2b).

10. Profilé de conduction de courant (1) selon la revendication 8 ou 9, **caractérisé en ce que** le point destiné à la rupture (15) se brise sous l'application d'une force horizontale et/ou verticale.

11. Profilé de conduction de courant (1) selon l'une quelconque des revendications 9 à 10, **caractérisé en ce que** l'élément de pontage (6) est rapporté ou moulé d'une seule pièce sur au moins l'un des éléments de profilé (2a, 2b).

12. Profilé de conduction de courant (1) selon l'une quelconque des revendications précédentes, **caractérisé en ce que** les éléments de profilé (2a, 2b) présentent des éléments d'enclenchement (14) en vue d'une fixation sur un rail support.
